# EUROPEAN PATENT APPLICATION

(11) **EP 1 600 491 A1**
(43) Date of publication of application: **30.11.2005**
(21) Application number: 04716317.5
(22) Date of filing: 02.03.2004
(51) Int. Cl.: C10G 47/20, C10G 65/12, B01J 27/19, B01J 23/882

(54) **CATALYTIC HYDROREFINING PROCESS FOR CRUDE OIL**

(30) Priority: 04.03.2003 JP 2003056733
(71) Applicant: IDEMITSU KOSAN CO., LTD., Tokyo 100-8321 (JP)
(72) Inventor: YOSHITA, Mitsuru, 2990107 (JP)
(74) Representative: Gille Hrabal Struck Neidlein Prop Roos
(86) International application number: PCT/JP2004/002524
(87) International publication number: WO 2004/078889

(57) **Abstract**

The present invention provides a process for catalytic hydrotreatment of crude oil or crude oil from which a naphtha fraction and fractions lighter than the naphtha fraction are removed by collectively subjecting the crude oil or crude oil from which naphtha fraction and fractions lighter than the naphtha fraction are removed, to hydrotreatment steps including hydrodemetallization, hydrocracking and hydrodesulfurization, wherein said hydrocracking is performed in the presence of a catalyst comprising a carrier made of a composite containing zeolite and ultrafine titanium-group metal oxide particles on an inner surface of mesopores of the zeolite, and a catalytically active component that is supported on the carrier and made of at least one element selected from the group consisting of metals belonging to Groups 6, 8, 9 and 10 of the Periodic Table. According to the process of the present invention, qualities of kerosene and gas oil in the product oil can be considerably enhanced, so that it is possible to produce ultra-low sulfur kerosene and gas oil having a sulfur content of less than 10 ppm.

## Description

### TECHNICAL FIELD

The present invention relates to a process for catalytic hydrotreatment of crude oil or crude oil from which a naphtha fraction and fractions lighter than the naphtha fraction are removed, and a process for producing ultra-low sulfur kerosene or gas oil by distilling a product oil produced by the catalytic hydrotreatment process.

### BACKGROUND ARTS

Conventionally, in petroleum refining industries, crude oil has been generally separated into respective fractions by atmospheric distillation, and then the thus separated fractions have been desulfurized. On the other hand, in order to efficiently hydrotreat the crude oil, there have been proposed the method of directly subject crude oil collective desulfurization (refer to "Chemical Eng. Progress", Vol. 67(8), p. 57 (1971)), the method of collectively desulfurizing crude oil from which a naphtha fraction is removed (refer to Japanese Patent Application Laid-open No. Hei 3-294390), or the like. In these methods, although petroleum refining facilities used therein are simplified and operation-modifying costs are saved, the respective fractions in the obtained product oil have deteriorated qualities. In particular, a gas oil fraction in the product oil has a sulfur content as high as about 50 to 150 ppm, thereby failing to fully meet current regulations for quality of petroleum products which become more and more strict in view of recent tendency toward protection of global environment.

The present inventors have already proposed the method of producing high-quality kerosene and gas oil fractions by hydrocracking a heavy oil (refer to Japanese Patent Application Laid-open No. Hei 6-98270), the method of improving a quality of kerosene and gas oil fractions by a specific combination of catalysts for hydrotreatment of crude oil or crude oil from which a naphtha fraction is removed (refer to Japanese Patent Application Laid-open No. Hei 7-268361), and the method of further hydrogenating a gas-phase fraction obtained by gas-phase separation process (refer to Japanese Patent Application Laid-open No. 2000-136391, Figs. 7 and 8).

However, the regulations for quality of petroleum fractions or products have been rapidly tightened to an extent more than expectation as described above. For example, although the sulfur content in the gas oil fraction is currently limited to 350 ppm or lower, it is expected that the sulfur content should be limited to 50 ppm or lower until the year of 2004 and subsequently to 10 ppm or lower. However, in the above conventional methods proposed by the present inventors, the sulfur content in gas oil is reduced merely to about 50 ppm even if the operation conditions, etc., are adjusted. Therefore, it may be currently difficult to produce an ultra-low sulfur gas oil having a sulfur content of 10 ppm or lower.

### DISCLOSURE OF THE INVENTION

The present invention has been made in view of the above problems. An object of the present invention is to improve the conventional crude oil refining processes, and provide a catalytic hydrotreatment process in which crude oil or crude oil from which naphtha fraction and fractions lighter than the naphtha fraction are removed is collectively subjected to catalytic hydrotreatment so as to considerably enhance a quality of kerosene or gas oil in a product oil obtained by the catalytic hydrotreatment and, as a result, produce ultra-low sulfur kerosene or gas oil having a sulfur content of less than 10 ppm, as well as a process for producing the ultra-low sulfur kerosene or gas oil from the product oil.

As a result of extensive researches in view of the above object, the present inventors have found that when crude oil or crude oil from which naphtha fraction and fractions lighter than the naphtha fraction are removed is collectively subjected to catalytic hydrotreatment including successive steps of hydrodemetallization, hydrocracking and hydrodesulfurization, the above object is effectively achieved by using as the hydrocracking catalyst, a catalyst comprising a carrier made of a composite containing zeolite and ultrafine titanium-group metal oxide particles on an inner surface of mesopores of the zeolite, and a catalytically active component that is supported on the carrier and made of at least one element selected from the group consisting of metals belonging to Groups 6, 8, 9 and 10 of the Periodic Table. The present invention has been accomplished on the basis of this finding.

Thus, the present invention provides:
1. A process for catalytic hydrotreatment of crude oil or crude oil from which a naphtha fraction and fractions lighter than the naphtha fraction are removed by collectively subjecting the crude oil or crude oil from which naphtha fraction and fractions lighter than the naphtha fraction are removed sequentially to hydrodemetallization, hydrocracking and then hydrodesulfurization,
   wherein said hydrocracking is performed in the presence of a catalyst comprising a carrier made of a composite containing zeolite and ultrafine titanium-group metal oxide particles on an inner surface of mesopores of the zeolite, and a catalytically active component that is supported on the carrier and made of at least one element selected from the group consisting of metals belonging to Groups 6, 8, 9 and 10 of the Periodic Table.
2. A process for catalytic hydrotreatment of crude oil or crude oil from which a naphtha fraction and fractions lighter than the naphtha fraction are removed by collectively subjecting the crude oil or crude oil from which naphtha fraction and fractions lighter than the naphtha fraction are removed sequentially to hydrodemetallization, hydrodesulfurization and then hydrocracking,
   wherein said hydrocracking is performed in the presence of a catalyst comprising a carrier made of a composite containing zeolite and ultrafine titanium-group metal oxide particles on an inner surface of mesopores of the zeolite, and a catalytically active component that is supported on the carrier and made of at least one element selected from the group consisting of metals belonging to Groups 6, 8, 9 and 10 of the Periodic Table.
3. A process for catalytic hydrotreatment of crude oil or crude oil from which a naphtha fraction and fractions lighter than the naphtha fraction are removed by collectively subjecting the crude oil or crude oil from which naphtha fraction and fractions lighter than the naphtha fraction are removed sequentially to hydrodemetallization, hydrodesulfurization, hydrocracking and then hydrodesulfurization,
   wherein said hydrocracking is performed in the presence of a catalyst comprising a carrier made of a composite containing zeolite and ultrafine titanium-group metal oxide particles on an inner surface of mesopores of the zeolite, and a catalytically active component that is supported on the carrier and made of at least one element selected from the group consisting of metals belonging to Groups 6, 8, 9 and 10 of the Periodic Table.
4. The process according to any of the above aspects 1 to 3, wherein an atomic ratio of aluminum to silicon [Al]/[Si] contained in the zeolite of the carrier is in the range of 0.01 to 0.1.
5. A process for producing ultra-low sulfur kerosene by distilling a product oil produced by the process as described in any of the above aspects 1 to 4.
6. A process for producing ultra-low sulfur gas oil by distilling a product oil produced by the process as described in any of the above aspects 1 to 4.

### BRIEF DESCRIPTION OF THE DRAWINGS

Fig. 1 is a schematic block flow sheet of a process for hydrotreatment of crude oil, etc., according to the preferred embodiment (Example 1; Case 1) of the present invention;
Fig. 2 is a schematic block flow sheet of a process for hydrotreatment of crude oil, etc., according to the preferred embodiment (Example 2; Case 2) of the present invention;
Fig. 3 is a schematic block flow sheet of a process for hydrotreatment of crude oil, etc., according to the preferred embodiment (Example 3; Case 3) of the present invention;
Fig. 4 is a schematic block flow sheet of a process for hydrotreatment of crude oil, etc., according to the preferred embodiment (Example 4; Case 4) of the present invention;
Fig. 5 is a schematic block flow sheet of a process for hydrotreatment of crude oil, etc., according to the preferred embodiment (Example 5; Case 5) of the present invention;
Fig. 6 is a schematic block flow sheet of a process for hydrotreatment of crude oil, etc., according to the preferred embodiment (Example 6; Case 6) of the present invention;
Fig. 7 is a schematic block flow sheet of a conventional process (Comparative Example 1); and
Fig. 8 is a schematic block flow sheet of another conventional process (Comparative Example 2).

### PREFERRED EMBODIMENT TO CARRY OUT THE INVENTION

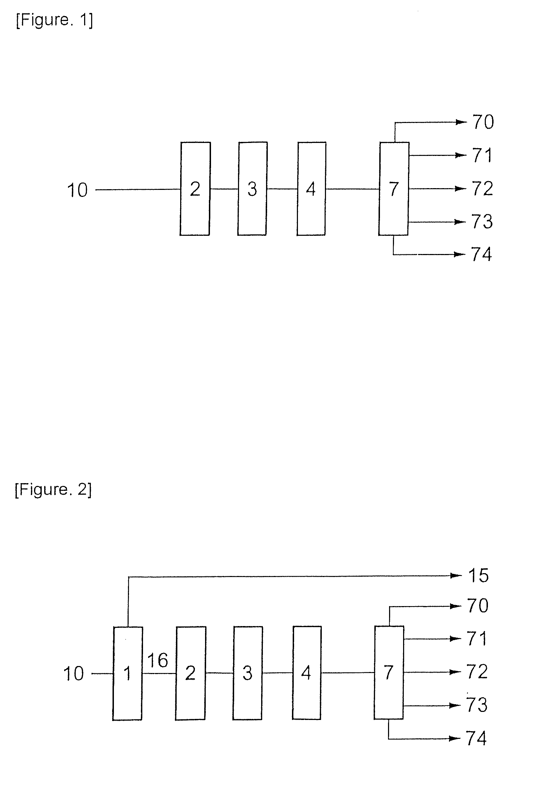

The present invention is described in detail below. Schematic flow sheets (Cases 1 to 6) according to the preferred embodiments of the present invention are shown in Figs. 1 to 6. The subject matters of the present invention are summarized as follows. That is, according to the present invention, there are provided processes for catalytic hydrotreatment of crude oil or crude oil from which a naphtha fraction and fractions lighter than the naphtha fraction (hereinafter occasionally referred to merely as "naphtha fraction, etc.") are removed (hereinafter occasionally referred to merely as "topped crude oil") by collectively subjecting the crude oil or topped crude oil to a catalytic hydrotreatment including steps of hydrodemetallization, hydrocracking and hydrodesulfurization, wherein the hyrocracking is performed in the presence of a catalyst comprising a carrier made of a composite containing zeolite and ultrafine titanium-group metal oxide particles on an inner surface of mesopores of the zeolite, and a catalytically active component that is supported on the carrier and made of at least one element selected from the group consisting of metals belonging to Groups 6, 8, 9 and 10 of the Periodic Table.
(1) Raw Oil
   (i) The raw oil used in the present invention includes not only petroleum-based crude oils but also non-petroleum-based crude oils. Examples of the non-petroleum-based crude oils include coal-liquefied oils, tar sand oils, oil sand oils, oil shale oils, Orinoco tar or the like, as well as synthetic oils produced therefrom. Also, there may be used mixtures of the petroleum-based crude oils and non-petroleum-based crude oils.
   (ii) In view of economical effect of the hydrotreatment, the most preferred crude oil is a petroleum-based crude oil capable of satisfying at least one of the three conditions including an asphaltene content of 1% by mass or higher, a V or Ni content of 10 ppm by weight or higher and a sulfur content of 0.1% by mass or higher.
(2) Pretreatment
   (i) The raw crude oil is preferably desalted to prevent a preliminary distillation tower from being stained or a reaction tower from being clogged.
   (ii) The desalting treatment may be conducted by known methods ordinarily used by those skilled in the art, such as chemical desalting, Petreco electric desalting method, Hau Baker electric desalting method or the like.
(3) Step 1 for Separation of Naphtha Fraction, etc. (Preliminary distillation tower)
   (i) In some cases, it will be advantageous to remove naphtha fraction, etc. 15 from desalted crude oil 10 according to the requirements. For example, the removal of the naphtha fraction, etc., is advantageous in such a case where the product oil obtained by the process of the present invention is atmospherically distilled in the next step to remove the naphtha fraction, etc., and then catalytically reformed. In this case, the sulfur content in the naphtha fraction, etc., should be reduced to about 0.5 ppm by mass. Since it is difficult to desulfurize the naphtha fraction, etc., to such an extent by the catalytic hydrotreatment of the present invention, the removal of the naphtha fraction, etc., is advantageously performed using a preliminary distillation tower as shown in Fig. 2.
   (ii) The naphtha fraction, etc., may be removed using an ordinary preflash drum or preflash column. The preflash drum or preflash column is preferably operated at a temperature of 150 to 300°C. under a pressure of 0.2 to 1 MPa.
   (iii) With regard to the boiling point of the naphtha fraction, etc. to be separated, the initial boiling point thereof is determined by the crude oil as the raw material, and the end point is preferably in the range of 125 to 174°C. An end point thereof, when being lower than 125°C, results in lowered reaction rate due to lowered hydrogen partial pressure in the catalytic hydrotreatment of the next step, whereas an end point thereof, when being higher than 174°C tends to cause an increase in sulfur contents of the kerosene fraction in the product oil, sometimes causing off-specification products.
(4) Hydrodemetallization Step 2
   (i) The crude oil 10 or topped crude oil 16 is raised in its temperature and pressure, and subjected to collective hydrodemetallization treatment with hydrogen in the first stage hydrodemetallization step 2. This step may be performed using a single reaction tower or a plurality of reaction towers.
   (ii) There is used, as the catalyst for the hydrodemetallization step, at least one metal selected from the group consisting of metals belonging to groups 5, 6, 8, 9, and 10, respectively, of the Periodic Table which is supported on a carrier comprising at least one material selected from the group consisting of porous inorganic oxides such as alumina, silica and sepiolite, acidic carriers and natural minerals, in an amount of about 3 to 30% by mass expressed in terms of oxide on the basis of the total amount of the catalyst, said catalyst having an average pore size of at least 100 Å or larger. The catalyst may be a commercially available hydrodemetallization catalyst. Preferably, the necessary amount of the hydrodemetallization catalyst is set to 10 to 80% by volume on the basis of the cumulative amount of the metals that are contained in the crude oil to be treated during a prescribed period of time.
   (iii) Operation conditions of the hydrodemetallization step include a reaction temperature in the range of 300 to 450°C, preferably 330 to 410°C, a hydrogen partial pressure in the range of 3 to 20 MPa(G), preferably 10 to 18 MPa(G), a hydrogen/oil ratio in the range of 200 to 2000 Nm³/kl, preferably 400 to 800 Nm³/kl, and an LHSV (liquid hourly space velocity) of 0.1 to 10 h⁻¹, preferably 0.3 to 5 h⁻¹.

   The reaction temperature, hydrogen partial pressure or hydrogen/oil ratio, when being less than said preferable range, brings about lowered reaction efficiency, whereas said factor, when being more than said preferable range, leads to lowered economical efficiency. On the contrary, the LHSV, when being less than the above-mentioned preferable range, leads to lowered economical efficiency, whereas the LHSV, when being more than the aforesaid preferable range, brings about lowered reaction efficiency.
(5) Hydrocracking Step 3
   (i) The crude oil which has been subjected to collective hydrodemetallization treatment (Cases 1 and 2) or collective hydrodesulfurization treatment (Cases 3 to 6) is subsequently subjected to collective hydrocracking treatment. This step may be performed using a single reaction tower or a plurality of reaction towers.
   (ii) In the present invention, as the catalyst to be used in this hydrocracking step, there is used at least one element selected from the group consisting of metals belonging to groups 6, 8, 9 and 10, respectively, of the Periodic Table which is supported on a carrier (hereinafter occasionally referred to as "modified zeolite") made of a composite containing zeolite and ultrafine titanium-group metal oxide particles on an inner surface of mesopores of the zeolite. Thus, as the carrier, there is used the modified zeolite made of a composite containing zeolite and ultrafine titanium-group metal oxide particles on an inner surface of mesopores of the zeolite in which an atomic ratio of aluminum to silicon ([Al]/[Si]) is in the range of preferably 0.01 to 0.1, more preferably 0.03 to 0.08. Examples of the titanium-group metal oxide include titania and zirconia. The size of the ultrafine titanium-group metal oxide particles on an inner surface of mesopores of the zeolite may be suitably selected so as not to adversely affect the diffusion velocity of the substances to be reacted, and is preferably substantially uniform in the range of 5 to 10 nm. The content of the titanium-group metal oxide in the carrier is 1 to 10% by mass, preferably 3 to 7% by mass.
      As the raw material for production of the above zeolite-based carrier, there may be used proton exchange-type zeolite in which an aluminum/silicon ratio ([Al]/[Si]) thereof is 0.01 to 0.35, preferably 0.1 to 0.33, and a proportion of mesopores (pores having a pore diameter of 5 to 30 nm) therein is 10% or higher, preferably 15% or higher of a total pore volume thereof. The upper limit of the proportion of the mesopores is usually about 30%, though not particularly limited thereto. The zeolite has an average primary particle size of usually 0.1 to 1 µm, preferably 0.2 to 0.5 µm, though not particularly limited thereto. The carrier used in the present invention is produced by contacting the above raw zeolite with an aqueous solution of titanium-group metal salt (water-soluble salt such as sulfates or halides). The concentration of the titanium-group metal (hereinafter referred to merely as "metal") in the aqueous solution is 0.02 to 0.1 mol/liter, preferably 0.05 to 0.1 mol/liter. The pH value of the aqueous solution of titanium-group metal salt is controlled to 0.8 to 2, preferably 1.0 to 1.9. The zeolite and the aqueous metal salt solution is contacted with each other at a temperature of about 25 to 80°C. When the zeolite and the aqueous metal solution are contacted with each other under the above conditions, aluminum present on a surface of the zeolite (aluminum silicate) is subjected to dealuminization reaction with the strong acid. With this reaction, metal hydroxide in the form of ultrafine particles are deposited on the inner surface of the mesopores of the zeolite. The amount of aluminum dealuminized is controlled such that the ratio [Al]/[Si] falls within the predetermined range. To this end, the contacting conditions such as contact time and temperature as well as pH of the aqueous solution may be appropriately adjusted.
      Then, after the contact between the above raw zeolite and the aqueous metal salt solution, the resultant zeolite is fully washed to such an extent that no acid radicals are recognized therein, and then dried. In this case, the drying is preferably conducted at as low a temperature as possible to prevent coagulation of the ultrafine metal hydroxide particles deposited on the inner surface of the mesopores of the zeolite. The drying temperature is preferably 25 to 100°C, more preferably near 50°C. After completion of the drying, the zeolite is calcinated at a temperature of 400 to 600°C, preferably 450 to 550°C. The calcinating atmosphere is not particularly restricted, and is preferably a nitrogen gas atmosphere. Also, air may be used as the drying atmosphere. the calcination time is in the range of 2 to 4 hours, and usually about 3 hours. The acid point density ([Al]/[Si] ratio) of the thus obtained carrier is appropriately adjusted according to applications thereof. In the case where the carrier is applied to catalysts for hydrocracking heavy oils, the [Al]/[Si] ratio is preferably adjusted in the range of 0.01 to 0.1. When the [Al]/[Si] ratio exceeds 0.1, the obtained catalyst tends to be deteriorated in asphaltene decomposition activity, resulting in increased gas components in the resultant decomposition product. When the [Al]/[Si] ratio is less than 0.01, the decomposition activity to high-boiling oil components (components having a boiling point of 520°C or higher) tends to be rapidly deteriorated.
      When the catalyst of the present invention is applied to the raw crude oil composed mainly of light oils or the like, the modified zeolite may contain aluminum, etc., in an amount of 10 to 50% by weight to control the catalytic activity thereof.
      The hydrocracking catalyst used in the present invention includes a hydrogenation-active metal supported on the carrier. As the hydrogenation-active metal, there is used at least one element selected from metals belonging to Groups 6, 8, 9 and 10 of the Periodic Table. The metal belonging to Group 6 of the Periodic Table is preferably tungsten or molybdenum. The metals belonging to Groups 8 to 10, respectively, of the Periodic Table may be used alone or in combination with at least one other. Preferable combinations of the metals include Ni-Mo, Co-Mo, Ni-W and Ni-Co-Mo taking into consideration their enhanced hydrogenation activity and less deterioration.
      The hydrogenation-active metal is supported on the carrier by conventionally known methods such as impregnation method. The content of the hydrogenation-active metal in the hydrotreating catalyst of the present invention is 0.1 to 10% by mass, preferably 1 to 8% by mass in terms of metallic element, and the hydrogenation-active metal may be supported on the carrier in an amount of 20% by mass or higher, preferably 25 to 50% by mass on the basis of the titanium-group metal oxide. The resultant catalyst has an average pore size of 5 to 30 nm, preferably 10 to 25 nm. The average pore size used herein means the value obtained by nitrogen adsorption method (BJH method; pore size measured: 17 to 3,000 Å). The hydrogenation-active metal supported on the carrier may be in the form of an oxide, a sulfide and/or a metallic element. In particular, when the hydrogenation-active metal is in the form of a metallic element such as nickel, cobalt, platinum and palladium, the resultant catalyst can show a high hydrogenation activity.
   (iii) Operation conditions of the hydrocracking step include a reaction temperature in the range of 300 to 450°C, preferably 360 to 420°C, a hydrogen partial pressure in the range of 3 to 20 MPa(G), preferably 10 to 18 MPa(G), a hydrogen/oil ratio in the range of 200 to 2,000 Nm³/kl, preferably 400 to 800 Nm³/kl, and an LHSV (liquid hourly space velocity) of 0.1 to 10 h⁻¹, preferably 0.2 to 2 h⁻¹.

   The reaction temperature, hydrogen partial pressure or hydrogen/oil ratio, when being less than said preferable range, brings about lowered reaction efficiency, whereas said factor, when being more than said preferable range, leads to lowered economical efficiency. On the contrary, the LHSV, when being less than the above-mentioned preferable range, leads to lowered economical efficiency, whereas the LHSV, when being more than the aforesaid preferable range, brings about lowered reaction efficiency.
(6) Hydrodesulfurization Step 4
   (i) The crude oil which has been subjected to collective hydrocracking treatment (Cases 1, 2, 5 and 6) or collective hydrodemetallization treatment (Cases 3 to 6), is fed to a heat exchanger to lower the fluid temperature when the reaction temperature needs to be controlled. In the case where the reaction temperature control is possible by quenching with hydrogen gas or oil, said crude oil is directly subjected to collective hydrodesulfurization treatment in the hydrodesulfurization step 4 without installing a heat exchanger. This step may be performed using a single reaction tower or a plurality of reaction towers.
   (ii) As the catalyst for the hydrodesulfurization step 4, there may be used a conventional hydrodesulfurization catalyst for heavy oils, that is, at least one element selected from the group consisting of metals belonging to groups 5, 6, 8, 9 and 10, respectively, of the Periodic Table which is supported on a carrier comprising alumina, silica, zeolite or a mixture thereof in an amount of about 3 to 30% by mass expressed in terms of oxide on the basis of the total amount of the catalyst, said catalyst having an average pore size of at least 80Å or larger. Also, the catalysts composed of at least one element selected from the group consisting of metals belonging to groups 5, 6, 8, 9 and 10, respectively, of the Periodic Table which is supported on a carrier comprising at least one material selected from the group consisting of alumina-phosphorus, alumina-alkaline earth metal compound, alumina-titania, alumina-zirconia, alumina-boria and the like as described in Japanese Patent Application Laid-open Nos. Hei 7-305077 and Hei 5-98270, may be preferably used as the hydrodesulfurization catalyst because of their enhanced reforming effect on kerosene and gas oil fractions.
   (iii) Operation conditions of the hydrodesulfurization step include a reaction temperature in the range of 300 to 450°C, preferably 300 to 420°C, a hydrogen partial pressure in the range of 3 to 20 MPa(G), preferably 10 to 18 MPa(G), a hydrogen/oil ratio in the range of 200 to 2,000 Nm³/kl, preferably 400 to 800 Nm³/kl, and an LHSV (liquid hourly space velocity) of 0.1 to 10 h⁻¹, preferably 0.2 to 2 h⁻¹.

   The reaction temperature, hydrogen partial pressure or hydrogen/oil ratio, when being less than the above-mentioned preferable range, brings about lowered reaction efficiency, whereas said factor, when being more than the above-mentioned preferable range, gives rise to lowered economical efficiency. On the other hand, the LHSV, when being less than the above-mentioned preferable range, gives rise to lowered economical efficiency, whereas the LHSV, when being more than the above-mentioned preferable range, brings about lowered reaction efficiency.
(7) Separation Step
   The crude oil which has been subjected to collective hydrodemetallization treatment, collective hydrocracking treatment and collective hydrodesulfurization treatment, is introduced in accordance with an ordinary method into a separation step wherein the oil is treated by a plurality of separation vessels and separated into a gas portion and a liquid portion. Such impurities as hydrogen sulfide, ammonia and the like are removed from the gas portion thus separated, and then the gas portion thus treated is subjected to a hydrogen purification treatment, joined with a fresh feed gas, and thereafter recycled to the reaction system.
(8) Step for Remixing of Naphtha Fraction, etc.
   In the case where naphtha fraction, etc., are removed from the crude oil in the preliminary distillation tower in the above step (3), the naphtha fraction thus separated can be treated by any of the following methods 1 and 2 according to the demand of the products.
   (i) The naphtha fraction, etc., are recovered and directly shipped.
   (ii) The thus recovered naphtha fraction, etc., are subjected to hydrodesulfurization treatment, and is mixed with the feed fluid in the below-mentioned distillation step 7.
(9) Production of Reformed Crude Oil
   Depending upon the locational conditions of the production apparatus, it may be sometimes advantageous that the oil is shipped as a reformed crude oil. For example, this applies to such a case where the hydrotreatment plant is located in the vicinity of a crude oil shipping unit in an oil producing country where an oil product shipping unit is however unavailable. In this case, the product oil may be used as it is, or may be is fed to a hydrogen sulfide removal unit attached to desulfurization equipment, for example, a hydrogen sulfide stripper to obtain a reformed crude oil. By converting the product oil to the reformed crude oil, there can be obtained such effect and advantage that the existing crude oil shipping unit is usable as it is, and further the reformed crude oil can be transported at a low cost by using large-sized oil tankers.
(10) Distillation Step
   In the case where the locational conditions described in the above step (9) are not applicable, the liquid portion obtained in the separation step is fed to the distillation step 7, and fractionated into respective oil products by ordinary methods. It is possible to fractionate the liquid portion into naphtha, kerosene, gas oil (ultra-low sulfur gas oil having a sulfur content of less than 10 ppm) and atmospheric residue under the atmospheric fractionation conditions by setting the distillation temperature to the range of 20 to 157°C for naphtha fraction 71, the range of 157 to 239°C for kerosene fraction 72, the range of 239 to 343°C for gas oil fraction 73, and the range of 343°C or higher for atmospheric residue. The atmospheric residue may be subsequently distilled under vacuum into vacuum gas oil, vacuum residues, etc.
(11) Type of Reaction Tower

There is no specific limitation on the type of the reaction equipment used in collective hydrodemetallization treatment, collective hydrocracking treatment and collective hydrodesulfurization treatment in the process according to the present invention, and there may be adopted, for example, reaction equipment of fixed bed type, moving bed type, fluidized bed type, ebullient bed type, slurry bed type and the like.

The present invention will be described in more detail by reference to the following examples, but it should be noted that these examples are not intended to limit the scope of the invention thereto.

As the raw crude oil, there were used Arabian heavy desalted crude oil, and Arabian heavy desalted crude oil from which naphtha fraction, etc., are removed (hereinafter referred to as "Arabian heavy topped desalted crude oil"). The properties of these raw crude oils are shown in Table 1. The properties of the catalysts that were used for the reaction of each of the treatment steps are shown in Table 2.

**TABLE 1**

| Properties of Raw Crude Oil | | | |
|---|---|---|---|
| Item | Arabian heavy desalted crude oil | Arabian heavy desalted crude oil from which naphtha fraction, etc., are removed | Naphtha fraction, etc., removed |
| Density (g/ml at 15°C) [JIS K2249] | 0.892 | 0.924 | 0.700 |
| Sulfur content (mass %) [JIS K2541] | 2.84 | 3.19 | 0.026 |
| Nitrogen content (ppm) [JIS K2609] | 1460 | 1640 | 1> |
| V content (ppm) [JPI5S-10] | 53.6 | 56.5 | - |
| Ni content (ppm) [JPI5S-11] | 1.7.1 | 17.9 | - |
| n-Heptane-insolubl e component (mass %) | 4.59 | 5.11 | - |

| Distillate properties: [Naphtha: ASTM D3710] [Others: ASTM D5307] | | | |
|---|---|---|---|
| IBP (°C) | 1 | 101 | 22 |
| 50% distilled | 423 | 450 | 92 |
| EP (°C) | - | - | 174 |
| Yield (vol % based on crude oil) | 100 | 85.8 | 14.2 |

**TABLE 2**

| Properties of Catalyst | | | | |
|---|---|---|---|---|
| Catalyst | Hydro-demetal liza-tion catalyst A | Hydrocracking catalyst B | Hydro-desulfurization catalyst C | Conventional Hydrocracking catalyst D |
| Carrier | | | | |
| Composition (mass % based on carrier) | | | | |
| Alumina | 97 | 7 | 90 | 35 |
| Boria | | | 10 | |
| Iron-containin g alumino-silicat e | | | | 65 |
| Silica | 1.3 | 84 | | |
| Phosphorus oxide | 1.7 | | | |
| Titanium oxide | | 9 | | |
| Al/Si (atomic ratio) | | 0.05 | | |

| Catalyst | | | | |
|---|---|---|---|---|
| Composition (mass % based on catalyst) | | | | |
| Nickel oxide | 2.3 | | | |
| Molybdenum oxide | 8.3 | 10 | 14 | 10 |
| Cobalt oxide | | 4 | 3.7 | 4 |
| Specific surface area (m²/g) | 143 | 114 | 228 | 445 |
| Pore volume (ml/g) | 0.76 | 0.19 | 0.71 | 0.62 |
| Average pore size (Å) | 190 | 160 | 124 | 158 |
| Note: In the hydrocracking catalyst B, Co and Mo were supported on the carrier by the method as described in Examples 1 to 5 of Japanese Patent No. 3341011. | | | | |

### EXAMPLE 1

### (Collective Hydrodemetallization Treatment, Hydrocracking Treatment and Hydrodesulfurization Treatment of Crude Oil: Case 1: refer to Fig. 1)

A 300 ml tubular reactor packed with 28% by volume of the catalyst A and 33% by volume of the catalyst B as shown in Table 2 was connected in series to another 300 ml tubular reactor packed with 39% by volume of the catalyst C as also shown in Table 2 such that these catalysts were arranged in the order of A, B and C, thereby performing the above treatments. Specifically, the Arabian heavy desalted crude oil as raw crude oil as shown in Table 1 was subjected to the above treatment steps under the conditions including a hydrogen partial pressure of 13.2 MPa(G), a hydrogen/oil ratio of 550 Nm³/kl, a reaction temperature of 380°C for the catalyst A, 400°C for the catalyst B and 360°C for the catalyst C, and an LHSV of 0.408 h⁻¹.

After the raw crude oil was passed through the catalysts for 1,500 hours, the resultant product oil was separated by distillation using a distillation equipment having 15 theoretical plate column, into LPG 70 (propane and butane), naphtha fraction 71 (from pentane to fraction having a boiling point of 157°C), kerosene fraction 72 (fraction having a boiling point of 157 to 239°C), gas oil fraction 73 (fraction having a boiling point of 239 to 343°C) and atmospheric residue 74 (fraction having a boiling point of over 343°C). The analysis was made for the qualities of each of the fractions. The properties of each of the fractions are shown in Table 3.

Moreover, the atmospheric residue was subjected to vacuum simple distillation to separate a vacuum gas oil (fraction having a boiling point of 343 to 525°C) therefrom. The properties of the thus separated vacuum gas oil are also shown in Table 3.

As a result, there were obtained high-quality kerosene and gas oil fractions which were extremely minimized in the contents of sulfur components, aromatic components and polycyclic aromatic components. Further, it was unexpectedly found that the sulfur content in the gas oil was as low as less than 10 ppm. In addition, the liquid fractions were lowered in density, and were increased in volume by about 8%, since the Arabian heavy crude oil as the raw material was hydrocracked.

### EXAMPLE 2

### (Collective Hydrodemetallization Treatment, Hydrocracking Treatment and Hydrodesulfurization Treatment of Topped Crude Oil: Case 2: refer to Fig. 2)

The same procedure as in Example 1 was repeated except that the Arabian heavy desalted topped crude oil as shown in Table 1 was fed and passed through the respective catalysts for 1,500 hours under the same conditions as in Example 1. The properties of each of the fractions in the obtained product oil are shown in Table 3.

As a result, there were obtained high-quality kerosene and gas oil fractions which were extremely minimized in the contents of sulfur components, aromatic components and polycyclic aromatic components similarly to Example 1. Further, it was confirmed that the sulfur content in the kerosene and gas oil was as low as less than 10 ppm.

### EXAMPLE 3

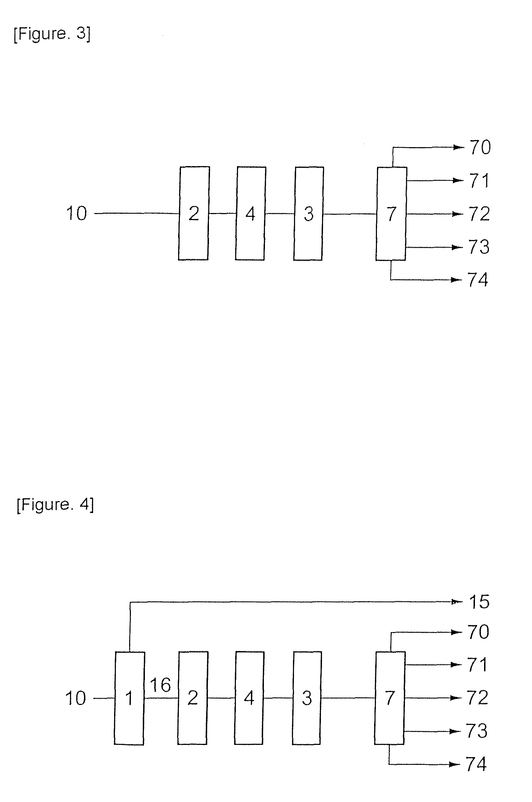

### (Collective Hydrodemetallization Treatment, Hydrodesulfurization Treatment and Hydrocracking Treatment of Crude Oil: Case 3: refer to Fig. 3)

The same procedure as in Example 1 was repeated except that the hydrodesulfurization catalyst C and the hydrocracking catalyst B were reversed in order of treatments without changing their amounts filled, thereby passing the crude oil through the respective catalysts for 1,500 hours under the same conditions as in Example 1. The properties of each of the fractions in the obtained product oil are shown in Table 3.

As a result, there were obtained high-quality kerosene and gas oil fractions which were extremely minimized in the contents of sulfur components, aromatic components and polycyclic aromatic components similarly to Example 1. Further, it was confirmed that the sulfur content in the kerosene and gas oil was as low as less than 10 ppm.

### EXAMPLE 4

### (Collective Hydrodemetallization Treatment, Hydrodesulfurization Treatment and Hydrocracking Treatment of Topped Crude Oil: Case 4: refer to Fig. 4)

The same procedure as in Example 2 was repeated except that the hydrodesulfurization catalyst C and the hydrocracking catalyst B were reversed in order of treatments without changing their amounts filled, thereby passing the topped crude oil through the respective catalysts for 1,500 hours under the same conditions as in Example 2. The properties of each of the fractions in the obtained product oil are shown in Table 3.

As a result, there were obtained high-quality kerosene and gas oil fractions which were extremely minimized in the contents of sulfur components, aromatic components and polycyclic aromatic components similarly to Example 2. Further, it was confirmed that the sulfur content in the kerosene and gas oil was as low as less than 10 ppm.

### EXAMPLE 5

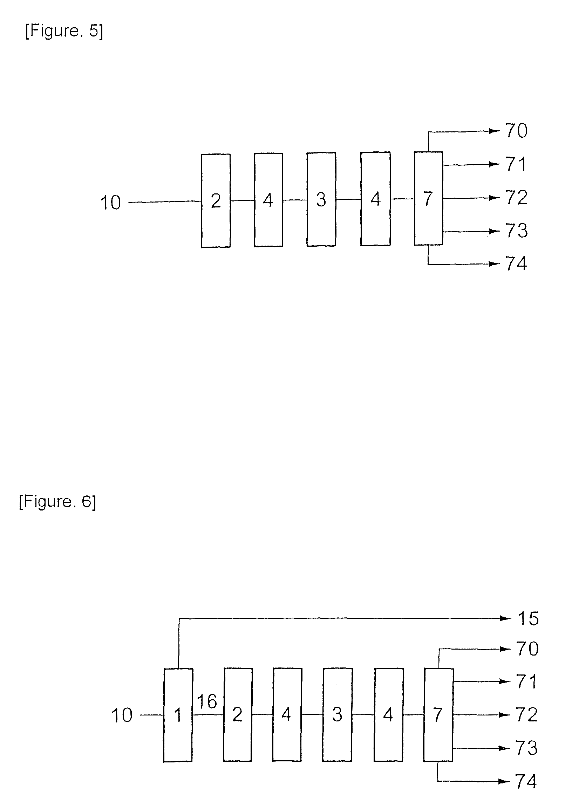

### (Collective Hydrodemetallization Treatment, Hydrodesulfurization Treatment, Hydrocracking Treatment and Hydrodesulfurization Treatment of Crude Oil: Case 5: refer to Fig. 5)

The same procedure as in Example 1 was repeated except that a half amount (19.5% by volume) of the hydrodesulfurization catalyst C used in Example 1 was disposed on a downstream side of the hydrodemetallization catalyst A and a remaining half thereof was disposed on a downstream side of the hydrocracking catalyst B, and the raw crude oil was passed through the catalyst A, the catalyst C, the catalyst B and the catalyst C in this order. The reaction conditions for the respective catalysts are the same as those used in Example 1. The properties of each of the fractions in the obtained product oil are shown in Table 3.

As a result, there were obtained high-quality kerosene and gas oil fractions which were extremely minimized in the contents of sulfur components, aromatic components and polycyclic aromatic components similarly to Example 1. Further, it was confirmed that the sulfur content in the kerosene and gas oil was as low as less than 10 ppm.

### EXAMPLE 6

### (Collective Hydrodemetallization Treatment, Hydrodesulfurization Treatment, Hydrocracking Treatment and Hydrodesulfurization Treatment of Topped Crude Oil: Case 6: refer to Fig. 6)

The same procedure as in Example 2 was repeated except that a half amount (19.5% by volume) of the hydrodesulfurization catalyst C used in Example 1 was disposed on a downstream side of the hydrodemetallization catalyst A and a remaining half thereof was disposed on a downstream side of the hydrocracking catalyst B, and the raw topped crude oil was passed through the catalyst A, the catalyst C, the catalyst B and the catalyst C in this order. The reaction conditions for the respective catalysts are the same as those used in Example 2. The properties of each of the fractions in the obtained product oil are shown in Table 3.

As a result, there were obtained high-quality kerosene and gas oil fractions which were extremely minimized in the contents of sulfur components, aromatic components and polycyclic aromatic components similarly to Example 2. Further, it was confirmed that the sulfur content in the kerosene and gas oil was as low as less than 10 ppm.

**TABLE 3-1-1**

| Properties of each Fraction | | | | |
|---|---|---|---|---|
| Item | Yield vs raw crude oil (vol. %) | Density (g/ml) | Sulfur content (ppm) | Nitrogen content (ppm) |
| Example 1 | | | | |
| LPG | 3.6 | 0.557 | - | - |
| Naphtha | 37.3 | 0.729 | 12 | 1> |
| Kerosene fraction | 20.9 | 0.796 | 2 | 1> |
| Gas oil fraction | 16.2 | 0.816 | 5 | 4 |
| Atmospheric residue | 30.0 | 0.958 | 15,000 | 2,480 |
| Vacuum gas oil fraction | (17.3) | 0.889 | 3,100 | 370 |
| Total fractions | 108.0 | 0.808 | 5,100 | 960 |

| Example 2 | | | | |
|---|---|---|---|---|
| LPG | 3.0 | 0.558 | - | - |
| Naphtha | 22.6 | 0.730 | 11 | 1> |
| Kerosene fraction | 21.0 | 0.805 | 2 | 1> |
| Gas oil fraction | 16.7 | 0.817 | 4 | 3 |
| Atmospheric residue | 30.0 | 0.956 | 15,400 | 2,360 |
| Vacuum gas oil fraction | (17.3) | 0.890 | 3,300 | 380 |
| Total fractions | 93.3 | 0.845 | 5,900 | 1,010 |

| Example 3 | | | | |
|---|---|---|---|---|
| LPG | 3.5 | 0.558 | - | - |
| Naphtha | 37.2 | 0.729 | 13 | 1> |
| Kerosene fraction | 20.9 | 0.797 | 6 | 1> |
| Gas oil fraction | 16.0 | 0.817 | 9 | 5 |
| Atmospheric residue | 30.2 | 0.959 | 15,500 | 2,580 |
| Vacuum gas oil fraction | (17.5) | 0.890 | 3,400 | 390 |
| Total fractions | 107.8 | 0.809 | 6,000 | 1,100 |

**TABLE 3-1-2**

| Properties of each Fraction | | | |
|---|---|---|---|
| Item | Total aromatic component (vol. %) | Polycyclic aromatic component (vol. %) | Cetane Index |
| Example 1 | | | |
| LPG | - | - | - |
| Naphtha | 7.0 | - | - |
| Kerosene fraction | 9.5 | 0.3 | - |
| Gas oil fraction | 9.1 | 1.5 | 72.1 |
| Atmospheric residue | - | - | - |
| Vacuum gas oil fraction | - | - | - |
| Total fractions | - | - | - |

| Example 2 | | | |
|---|---|---|---|
| LPG | - | - | - |
| Naphtha | 6.8 | - | - |
| Kerosene fraction | 9.3 | 0.2 | - |
| Gas oil fraction | 8.4 | 1.5 | 73.5 |
| Atmospheric residue | - | - | - |
| Vacuum gas oil fraction | - | - | - |
| Total fractions | - | - | - |

| Example 3 | | | |
|---|---|---|---|
| LPG | - | - | - |
| Naphtha | 7.6 | - | - |
| Kerosene fraction | 9.9 | 0.3 | - |
| Gas oil fraction | 9.3 | 1.7 | 71.9 |
| Atmospheric residue | - | - | - |
| Vacuum gas oil fraction | - | - | - |
| Total fractions | - | - | - |

**TABLE 3-1-3**

| Properties of each Fraction | | | | |
|---|---|---|---|---|
| Item | Yield vs raw crude oil (vol. %) | Density (g/ml) | Sulfur content (ppm) | Nitrogen content (ppm) |
| Example 4 | | | | |
| LPG | 2.9 | 0.558 | - | - |
| Naphtha | 22.5 | 0.730 | 12 | 1> |
| Kerosene fraction | 21.0 | 0.806 | 6 | 1> |
| Gas oil fraction | 16.7 | 0.817 | 9 | 4 |
| Atmospheric residue | 30.2 | 0.957 | 15,600 | 2,600 |
| Vacuum gas oil fraction | (17.4) | 0.890 | 3,600 | 420 |
| Total fractions | 93.3 | 0.846 | 6,100 | 1,050 |

| Example 5 | | | | |
|---|---|---|---|---|
| LPG | 3.4 | 0.557 | - | - |
| Naphtha | 37.3 | 0.729 | 10 | 1> |
| Kerosene fraction | 20.9 | 0.797 | 4 | 1> |
| Gas oil fraction | 16.4 | 0.818 | 7 | 4 |
| Atmospheric residue | 30.0 | 0.959 | 15,000 | 2,380 |
| Vacuum gas oil fraction | (17.1) | 0.890 | 3,300 | 350 |
| Total fractions | 108.0 | 0.808 | 5,800 | 1,040 |

| Example 6 | | | | |
|---|---|---|---|---|
| LPG | 2.9 | 0.558 | - | - |
| Naphtha | 22.7 | 0.729 | 9 | 1> |
| Kerosene fraction | 21.6 | 0.804 | 3 | 1> |
| Gas oil fraction | 17.0 | 0.816 | 6 | 3 |
| Atmospheric residue | 29.0 | 0.960 | 15,500 | 2,510 |
| Vacuum gas oil fraction | (16.8) | 0.891 | 3,540 | 360 |
| Total fractions | 93.2 | 0.845 | 6,050 | 990 |

**TABLE 3-1-4**

| Properties of each Fraction | | | |
|---|---|---|---|
| Item | Total aromatic component (vol. %) | Polycyclic aromatic component (vol. %) | Cetane Index |
| Example 4 | | | |
| LPG | - | - | - |
| Naphtha | 7.8 | - | - |
| Kerosene fraction | 9.9 | 0.3 | - |
| Gas oil fraction | 10.4 | 1.8 | 71.7 |
| Atmospheric residue | - | - | - |
| Vacuum gas oil fraction | - | - | - |
| Total fractions | - | - | - |

| Example 5 | | | |
|---|---|---|---|
| LPG | - | - | - |
| Naphtha | 7.0 | - | - |
| Kerosene fraction | 9.0 | 0.3 | - |
| Gas oil fraction | 8.9 | 1.6 | 73.9 |
| Atmospheric residue | - | - | - |
| Vacuum gas oil fraction | - | - | - |
| Total fractions | - | - | - |

| Example 6 | | | |
|---|---|---|---|
| LPG | - | - | - |
| Naphtha | 7.8 | - | - |
| Kerosene fraction | 9.9 | 0.3 | - |
| Gas oil fraction | 10.4 | 1.5 | 72.2 |
| Atmospheric residue | - | - | - |
| Vacuum gas oil fraction | - | - | - |
| Total fractions | - | - | - |

**TABLE 3-2-1**

| Properties of each Fraction | | | | | |
|---|---|---|---|---|---|
| Item | Smoke point (mm) | Pentane-in soluble component (mass %) | Vanadium content (ppm) | Nickel content (ppm) | Carbon residue content (mass %) |
| Example 1 | | | | | |
| LPG | - | - | - | - | - |
| Naphtha | - | - | - | - | - |
| Kerosene fraction | 26.5 | - | - | - | - |
| Gas oil fraction | - | - | - | - | - |
| Atmospheric residue | - | 2.9 | 22 | 14 | 12.8 |
| Total fractions | - | 1.2 | 9.1 | 5.8 | - |

| Example 2 | | | | | |
|---|---|---|---|---|---|
| LPG | - | - | - | - | - |
| Naphtha | - | - | - | - | - |
| Kerosene fraction | 27.0 | - | - | - | - |
| Gas oil fraction | - | - | - | - | - |
| Atmospheric residue | - | 3.0 | 23 | 15 | 12.9 |
| Total fractions | - | 1.3 | 9.5 | 6.4 | - |

| Example 3 | | | | | |
|---|---|---|---|---|---|
| LPG | - | - | - | - | - |
| Naphtha | - | - | - | - | - |
| Kerosene fraction | 26.0 | - | - | - | - |
| Gas oil fraction | - | - | - | - | - |
| Atmospheric residue | - | 3.0 | 23 | 15 | 13.1 |
| Total fractions | - | 1.3 | 9.5 | 6.4 | - |

**TABLE 3-2-2**

| Properties of each Fraction | | | | | |
|---|---|---|---|---|---|
| Item | Smoke point (mm) | Pentane-in soluble component (mass %) | Vanadium content (ppm) | Nickel content (ppm) | Carbon residue content (mass %) |
| Example 4 | | | | | |
| LPG | - | - | - | - | - |
| Naphtha | - | - | - | - | - |
| Kerosene fraction | 26.0 | - | - | - | - |
| Gas oil fraction | - | - | - | - | - |
| Atmospheric residue | - | 3.1 | 24 | 16 | 13.3 |
| Total fractions | - | 1.3 | 9.6 | 6.3 | - |

| Example 5 | | | | | |
|---|---|---|---|---|---|
| LPG | - | - | - | - | - |
| Naphtha | - | - | - | - | - |
| Kerosene fraction | 28.0 | - | - | - | - |
| Gas oil fraction | - | - | - | - | - |
| Atmospheric residue | - | 2.8 | 21 | 13 | 12.6 |
| Total fractions | - | 1.2 | 9.0 | 5.4 | - |

| Example 6 | | | | | |
|---|---|---|---|---|---|
| LPG | - | - | - | - | - |
| Naphtha | - | - | - | - | - |
| Kerosene fraction | 26.0 | - | - | - | - |
| Gas oil fraction | - | - | - | - | - |
| Atmospheric residue | - | 2.9 | 23 | 15 | 13.2 |
| Total fractions | - | 1.3 | 9.5 | 6.4 | - |

### COMPARATIVE EXAMPLE 1

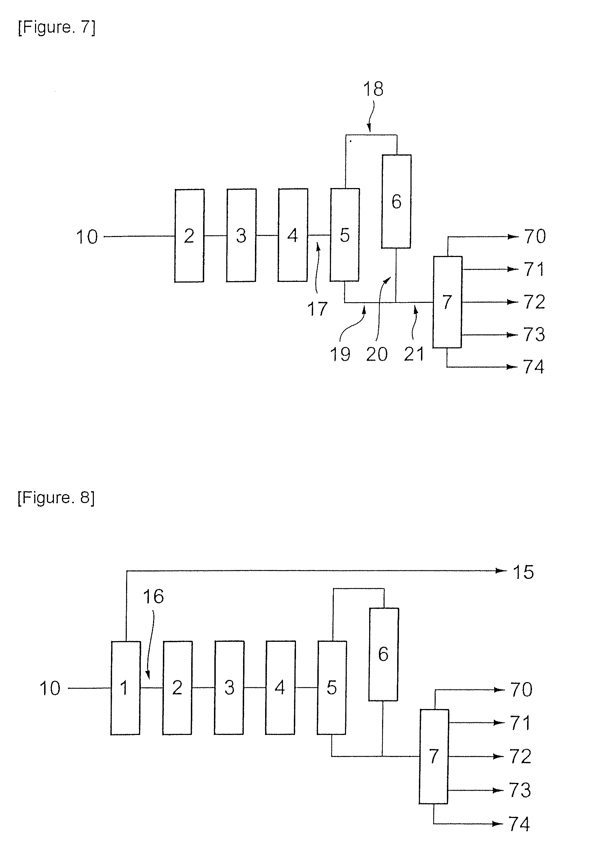

### (Hydroreforming Treatment of Gas-Phase Fluid in Separation Vessel Obtained by Gas-Liquid Separation of Oil Produced by Collective Hydrodemetallization Treatment, Hydrocracking Treatment and Hydrodesulfurization Treatment of Crude Oil: refer to Fig. 7)

(1) Collective Hydrodemetallization Treatment, Hydrocracking Treatment (Using Conventional Catalyst) and Hydrodesulfurization Treatment
   A 300 ml tubular reactor packed with 28% by volume of the catalyst A and 33% by volume of the conventional catalyst D as shown in Table 2 was connected in series to another 300 ml tubular reactor packed with 39% by volume of the catalyst C as also shown in Table 2 such that these catalysts were arranged in the order of A, D and C, thereby performing these treatments. The other conditions of the above treatments were the same as those used in Example 1. The properties of the product oil A 17 obtained by conducting the treatments are shown in Table 5.
(2) Hydroreforming Treatment after High-Pressure/High-Temperature Gas-Liquid Separation

The product oil A which had been produced by conducting the above reaction (1) for 1,000 to 3,000 hours, was separated into respective fractions including naphtha, kerosene, gas oil and vacuum gas oil using a batchwise distillation apparatus. Thus, there was prepared a raw oil B 18 for hydroreforming having the same chemical composition as that of the gas-phase fluid in the high-temperature/high-pressure gas-liquid separation vessel on the basis of the result of calculation for gas-phase composition at 340°C and a total pressure of 13.2 MPa (A) by means of adiabatic calculation for continuous gas-liquid separation using a process simulator (available from SimSci Corp. under the tradename "PRO/II" Ver.5). The properties of the resultant raw oil for hydroreforming are shown in Table 4.

**TABLE 4**

| Properties of Raw Oil for Hydroreforming | |
|---|---|
| Item | Raw oil for hydroreforming |
| Density (g/ml at 15°C) [JIS K2249] | 0.786 |
| Sulfur content (ppm) [JIS K2541] | 400 |
| Smoke point (mm) [JIS K2537] | 21.0 |
| Monocyclic aromatic compound (vol. %) | 19.5 |
| Dicyclic aromatic compound (vol. %) | 0.2 |
| Tricyclic aromatic compound (vol. %) | 0.1> |
| Total aromatic compound (vol. %) | 19.7 |

| above items according to JPI 5S-49-97 | |
|---|---|
| Naphtha fraction (mass %) | 52.3 |
| Kerosene fraction (mass %) | 37.4 |
| Gas oil fraction (mass %) | 8.6 |
| Vacuum gas oil fraction (mass %) | 1.7 |

The hydroreforming catalyst D described in Table 2 of Japanese Patent Application Laid-open No. 2000-136391 was packed into a 30 ml tubular reactor, and the raw oil B 18 for hydroreforming as shown in Table 4 was passed therethrough under the conditions including a hydrogen partial pressure of 10.3 MPa(G), a hydrogen/oil ratio of 700 Nm³/kl, a reaction temperature of 340°C and LHSV of 3.0 hr⁻¹.

The residual oil obtained when preparing the raw oil B for hydroreforming from the product oil A by passing through the catalysts for 1,500 to 2,000 hours, namely the gas-phase fluid 19 in the high-pressure/high-temperature separation vessel, was mixed with the above hydroreformed oil 20 at a given ratio to obtain a product oil C 21. The resultant product oil C 21 was separated by distillation using a distillation equipment having 15 theoretical plate column, into LPG (propane and butane), naphtha fraction (from pentane to fraction having a boiling point of 157°C), kerosene fraction (fraction having a boiling point of 157 to 239°C), gas oil fraction (fraction having a boiling point of 239 to 343°C) and atmospheric residue (fraction having a boiling point of over 343°C). The analysis was made for the qualities of each of the fractions. The properties of each of the fractions are shown in Table 5.

As a result, it was confirmed that although the kerosene and gas oil fractions were enhanced in qualities to some extent by subjecting the product oil obtained from the high-pressure/high-temperature gas-liquid separation to the hydroreforming step, these fractions were still deteriorated in quality as compared to those obtained in Example 1, specifically the sulfur content of the gas oil fraction was more than 50 ppm.

### COMPARATIVE EXAMPLE 2

### (Hydroreforming Treatment of Gas-Phase Fluid in Separation Vessel Obtained by Gas-Liquid Separation of Oil Produced by Collective Hydrodemetallization Treatment, Hydrocracking Treatment and Hydrodesulfurization Treatment of Topped Crude Oil)

(1) Collective Hydrodemetallization Treatment, Hydrocracking Treatment (Using Conventional Catalyst) and Hydrodesulfurization Treatment
   A 300 ml tubular reactor packed with 28% by volume of the catalyst A and 33% by volume of the catalyst D as shown in Table 2 was connected in series to another 300 ml tubular reactor packed with 39% by volume of the catalyst C as also shown in Table 2 such that these catalysts were arranged in the order of A, D and C, thereby performing these treatments. The other conditions of the above treatments were the same as those used in Example 2.
(2) Hydroreforming Treatment after High-Pressure/High-Temperature Gas-Liquid Separation

The raw oil for hydroreforming having the same composition as that of the gas-phase fluid in the high-pressure/high-temperature separation vessel was prepared by the method as described in the step (2) of Comparative Example 1, and then subjected to hydroreforming treatment. The properties of each of the obtained fractions are shown in Table 5.

As a result, it was confirmed that the obtained kerosene and gas oil fractions were deteriorated in qualities as compared to those in Example 2, namely, the obtained kerosene and gas oil fractions had increased contents of sulfur components, aromatic components and polycyclic aromatic components. In particular, it was confirmed that the sulfur content of the gas oil fraction was more than 50 ppm.

**TABLE 5-1-1**

| Properties of each Fraction | | | | |
|---|---|---|---|---|
| Item | Yield vs raw crude oil (vol. %) | Density (g/ml) | Sulfur content (ppm) | Nitrogen content (ppm) |
| Comparative Example 1 (product oil A) | | | | |
| LPG | 3.8 | 0.557 | - | - |
| Naphtha | 37.1 | 0.729 | 22 | 1> |
| Kerosene fraction | 19.9 | 0.797 | 5 | 2 |
| Gas oil fraction | 12.9 | 0.817 | 130 | 9 |
| Atmospheric residue | 33.3 | 0.958 | 18,000 | 2,520 |
| Vacuum gas oil fraction | (16.7) | 0.889 | 6,100 | 610 |
| Total fractions | 107.0 | 0.811 | 7,500 | 1,050 |

| Comparative Example 1 (product oil C) | | | | |
|---|---|---|---|---|
| LPG | 3.8 | 0.557 | - | - |
| Naphtha | 37.1 | 0.728 | 1 | 1> |
| Kerosene fraction | 19.9 | 0.796 | 3 | 1> |
| Gas oil fraction | 12.9 | 0.816 | 90 | 6 |
| Atmospheric residue | 33.3 | 0.958 | 18,000 | 2,520 |
| Vacuum gas oil fraction | (16.7) | 0.889 | 6,100 | 610 |
| Total fractions | 107.0 | 0.810 | 7,500 | 1,050 |

| Comparative Example 2 (product oil C) | | | | |
|---|---|---|---|---|
| LPG | 3.0 | 0.558 | - | - |
| Naphtha | 19.5 | 0.730 | 1 | 1> |
| Kerosene fraction | 21.2 | 0.795 | 2 | 1> |
| Gas oil fraction | 15.1 | 0.812 | 60 | 3 |
| Atmospheric residue | 33.2 | 0.963 | 18,400 | 2,470 |
| Vacuum gas oil fraction | (14.7) | 0.881 | 5,800 | 450 |
| Total fractions | 92.0 | 0.852 | 6,900 | 1,180 |

**TABLE 5-1-2**

| Properties of each Fraction | | | |
|---|---|---|---|
| Item | Total aromatic component (vol. %) | Polycyclic aromatic component (vol. %) | Cetane Index |
| Comparative Example 1 (product oil A) | | | |
| LPG | - | - | - |
| Naphtha | 12.9 | - | - |
| Kerosene fraction | 19.0 | 0.4 | - |
| Gas oil fraction | 19.1 | 2.5 | 65.1 |
| Atmospheric residue | - | - | - |
| Vacuum gas oil fraction | - | - | - |
| Total fractions | - | - | - |

| Comparative Example 1 (product oil C) | | | |
|---|---|---|---|
| LPG | - | - | - |
| Naphtha | 11.9 | - | - |
| Kerosene fraction | 9.5 | 0.1 | - |
| Gas oil fraction | 10.1 | 1.9 | 69.9 |
| Atmospheric residue | - | - | - |
| Vacuum gas oil fraction | - | - | - |
| Total fractions | - | - | - |

| Comparative Example 2 (product oil C) | | | |
|---|---|---|---|
| LPG | - | - | - |
| Naphtha | 11.8 | - | - |
| Kerosene fraction | 9.8 | 0.2 | - |
| Gas oil fraction | 7.4 | 1.5 | 73.5 |
| Atmospheric residue | - | - | - |
| Vacuum gas oil fraction | - | - | - - |
| Total fractions | - | - | - |

**TABLE 5-2**

| Properties of each Fraction | | | | | |
|---|---|---|---|---|---|
| Item | Smoke point (mm) | Pentane-in soluble component (mass %) | Vanadium content (ppm) | Nickel content (ppm) | Carbon residue content (mass %) |
| Comparative Example 1 (product oil C) | | | | | |
| LPG | - | - | - | - | - |
| Naphtha | - | - | - | - | - |
| Kerosene fraction | 22.5 | - | - | - | - |
| Gas oil fraction | - | - | - | - | - |
| Atmospheric residue | - | 2.90 | 22 | 14 | 12.8 |
| Total fractions | - | 1.21 | 9.2 | 5.8 | - |

| Comparative Example 1 (product oil C) | | | | | |
|---|---|---|---|---|---|
| LPG | - | - | - | - | - |
| Naphtha | - | - | - | - | - |
| Kerosene fraction | 26.5 | - | - | - | - |
| Gas oil fraction | - | - | - | - | - |
| Atmospheric residue | - | 2.90 | 22 | 14 | 12.8 |
| Total fractions | - | 1.21 | 9.2 | 5.8 | - |

| Comparative Example 2 (product oil C) | | | | | |
|---|---|---|---|---|---|
| LPG | - | - | - | - | - |
| Naphtha | - | - | - | - | - |
| Kerosene fraction | 28.0 | - | - | - | - |
| Gas oil fraction | - | - | - | - | - |
| Atmospheric residue | - | 2.91 | 23 | 13 | 12.6 |
| Total fractions | - | 1.25 | 9.5 | 5.4 | - |

### INDUSTRIAL APPLICABILITY

According to the present invention, there is provided a process for collective catalytic hydrotreatment of crude oil or crude oil from which naphtha fraction, etc., are removed which is capable of considerably enhancing qualities of kerosene and gas oil in the product oil and thereby producing ultra-low sulfur kerosene and gas oil having a sulfur content of less than 10 ppm, as well as a process for producing the ultra-low sulfur kerosene and gas oil from the product oil.

### [Brief Description of the Drawings]

[Fig. 1] A schematic block flow sheet of a process according to the preferred embodiment (Case 1; Example 1) of the present invention.
[Fig. 2] A schematic block flow sheet of a process according to the preferred embodiment (Case 2; Example 2) of the present invention.
[Fig. 3] A schematic block flow sheet of a process according to the preferred embodiment (Case 3; Example 3) of the present invention.
[Fig. 4] A schematic block flow sheet of a process according to the preferred embodiment (Case 4; Example 4) of the present invention.
[Fig. 5] A schematic block flow sheet of a process according to the preferred embodiment (Case 5; Example 5) of the present invention;
[Fig. 6] A schematic block flow sheet of a process according to the preferred embodiment (Case 6; Example 6) of the present invention;
[Fig. 7] A schematic block flow sheet of a conventional process (Comparative Example 1).
[Fig. 8] A schematic block flow sheet of a conventional process (Comparative Example 2).

### [Explanation of Marks]

1: Separation process for naphtha fraction etc
2: Hydrodemetallization process
3: Hydrocracking process
4: Hydrodesulfurization process
5: Vapor-liquid separation process
6: Hydrogenation process for vapor phase fluid after high pressure, high temperature vapor-liquid separation.
7: Distillation process
10: Crude oil
15: Naphtha fraction etc. separated in a separation process for naphtha fraction etc.
16: Topped crude oil
70: LPG, gas
71: Naphtha
72: Kerosene
73: Gas oil
74: Residual oil (heavy oil)

## Claims

1. A process for catalytic hydrotreatment of crude oil or crude oil from which a naphtha fraction and fractions lighter than the naphtha fraction are removed by collectively subjecting the crude oil or crude oil from which naphtha fraction and fractions lighter than the naphtha fraction are removed to hydrodemetallization, hydrocracking and then hydrodesulfurization,
wherein said hydrocracking is performed in the presence of a catalyst comprising a carrier made of a composite containing zeolite and ultrafine titanium-group metal oxide particles on an inner surface of mesopores of the zeolite, and a catalytically active component that is supported on the carrier and made of at least one element selected from the group consisting of metals belonging to Groups 6, 8, 9 and 10 of the Periodic Table.

2. A process for catalytic hydrotreatment of crude oil or crude oil from which a naphtha fraction and fractions lighter than the naphtha fraction are removed by collectively subjecting the crude oil or crude oil from which naphtha fraction and fractions lighter than the naphtha fraction are removed to hydrodemetallization, hydrodesulfurization and then hydrocracking,
wherein said hydrocracking is performed in the presence of a catalyst comprising a carrier made of a composite containing zeolite and ultrafine titanium-group metal oxide particles on an inner surface of mesopores of the zeolite, and a catalytically active component that is supported on the carrier and made of at least one element selected from the group consisting of metals belonging to Groups 6, 8, 9 and 10 of the Periodic Table.

3. A process for catalytic hydrotreatment of crude oil or crude oil from which a naphtha fraction and fractions lighter than the naphtha fraction are removed by collectively subjecting the crude oil or crude oil from which naphtha fraction and fractions lighter than the naphtha fraction are removed to hydrodemetallization, hydrodesulfurization, hydrocracking and then hydrodesulfurization,
wherein said hydrocracking is performed in the presence of a catalyst comprising a carrier made of a composite containing zeolite and ultrafine titanium-group metal oxide particles on an inner surface of mesopores of the zeolite, and a catalytically active component that is supported on the carrier and made of at least one element selected from the group consisting of metals belonging to Groups 6, 8, 9 and 10 of the Periodic Table.

4. The process according to any of claims 1 to 3, wherein an atomic ratio of aluminum to silicon [Al]/[Si] contained in the zeolite of the carrier is in the range of 0.01 to 0.1.

5. A process for producing ultra-low sulfur kerosene by distilling the product oil produced by the process as claimed in any of claims 1 to 4.

6. A process for producing ultra-low sulfur gas oil by distilling the product oil produced by the process as claimed in any of claims 1 to 4.
